Europäisches Patentamt

(19) European Patent Office

Office européen des brevets

(11) Numéro de publication: **0 344 073**
**A1**

(12) **DEMANDE DE BREVET EUROPEEN**

(21) Numéro de dépôt: 89401455.4

(51) Int. Cl.⁴: **G 02 C 7/06**

(22) Date de dépôt: 29.05.89

(30) Priorité: 27.05.88 FR 8807112

(43) Date de publication de la demande:
29.11.89 Bulletin 89/48

(84) Etats contractants désignés:
AT BE CH DE ES FR GB GR IT LI LU NL SE

(71) Demandeur: **Capez, Pierre**
**196 Boulevard Bineau**
**F-92200 Neuilly sur Seine (FR)**

(72) Inventeur: **Capez, Pierre**
**196 Boulevard Bineau**
**F-92200 Neuilly sur Seine (FR)**

(74) Mandataire: **Ahner, Francis et al**
**CABINET REGIMBEAU 26, avenue Kléber**
**F-75116 Paris (FR)**

(54) **Lentille de contact multifocale.**

(57) Cette lentille comporte une zone annulaire sphérique (11) apportant une correction pour la vision de loin et une zone centrale asphérique (21) apportant une correction pour la vision de près et la vision intermédiaire, cette zone centrale présentant une surface de révolution en forme de dôme en saillie sur la face extérieure de la lentille,

Selon l'invention, le dôme a une forme approximative de cône, sa surface (21) s'étendant entièrement d'un même côté de ce cône (22), à l'extérieur de celui-ci.

La hauteur au sommet du dôme (OE) est comprise, avant polissage et à l'état sec, entre 3 et 6µm, et son diamètre de base (2x0A) entre 1,4 et 1,9 mm.

La génératrice (AE) de cette surface de révolution comporte successivement, depuis la base jusqu'au sommet, un premier arc de courbe (AB) de pente croissante, un second arc de courbe (BC) de pente décroissante, un troisième arc de courbe (CD) de pente sensiblement constante, et un quatrième arc de courbe (DE) de pente généralement croissante.

FIG. 2

EP 0 344 073 A1

**Description**

## LENTILLE DE CONTACT MULTIFOCALE

Là présente invention concerne une lentille de contact multifocale.

Les lentilles de contact multifocales, qui sont notamment destinées aux presbytes, sont conçues de manière à former simultanément plusieurs images dun même objet se trouvant dans le champ de vision. Ces différentes images correspondent à des corrections dioptriques différentes, ce qui permet d'assurer une bonne vision aussi bien de loin que de près, la sélection entre les différentes images formées sur la rétine étant effectuée spontanément par le cortex.

(Par "vision de loin", on entendra la vision correspondant à une accommodation à l'infini ou voisine de l'infini, par "vision de près" la vision correspondant à l'accommodation maximale du sujet ou une accommodation voisine (typiquement, pour la lecture) et par "vision intermédiaire" la vision correspondant à toute accommodation située entre ces deux extrêmes.)

On connaît de telles lentilles (voir notamment EP-A-0 232 191) comportant une zone annulaire sphérique apportant une correction pour la vision de loin et une zone centrale asphérique apportant une correction pour la vision de près et la vision intermédiaire, cette zone centrale présentant une surface de révolution en forme de dôme en saillie sur la face extérieure de la lentille.

Une telle lentille, du fait des deux zones sphérique et asphérique présente donc dans son ensemble une puissance dioptrique variable du centre vers la périphérie. Néanmoins, on constate en pratique que de telles lentilles, si elles permettent d'obtenir une bonne vision de près (partie centrale de la zone centrale asphérique) et une bonne vision de loin (zone annulaire sphérique), ne sont toutefois pas très satisfaisantes en ce qui concerne la vision intermédiaire ; ceci est dû à la transition de puissance dioptrique entre la correction pour la vision de près et la correction pour la vision de loin.

Cet inconvénient, outre le fait qu'il ne procure pas une vision intermédiaire satisfaisante pour le porteur, augmente sa fatigue oculaire du fait de la difficulté qu'éprouve le cortex à sélectionner une image satisfaisante d'un objet se trouvant à une distance intermédiaire.

La présente invention vise à résoudre cette difficulté, en proposant une lentille de contact multifocale assurant une transition très progressive entre la vision de loin et la vision de près, et donc une très bonne accommodation pour la vision intermédiaire.

A cet effet, selon l'invention, le dôme central de la lentille affecte une forme approximative de cône, sa surface s'étendant essentiellement d'un même côté de ce cône, à l'extérieur de celui-ci.

Très avantageusement, la hauteur au sommet du dôme est comprise, avant polissage et à l'état sec, entre 3 et 6 µm (respectivement 3,57 et 7,14 µm à l'état hydraté), et le diamètre de base du dôme est compris, avant polissage et à l'état sec, entre 1,4 et 1,9 mm (respectivement 1,66 et 2,26 mm à l'état hydraté).

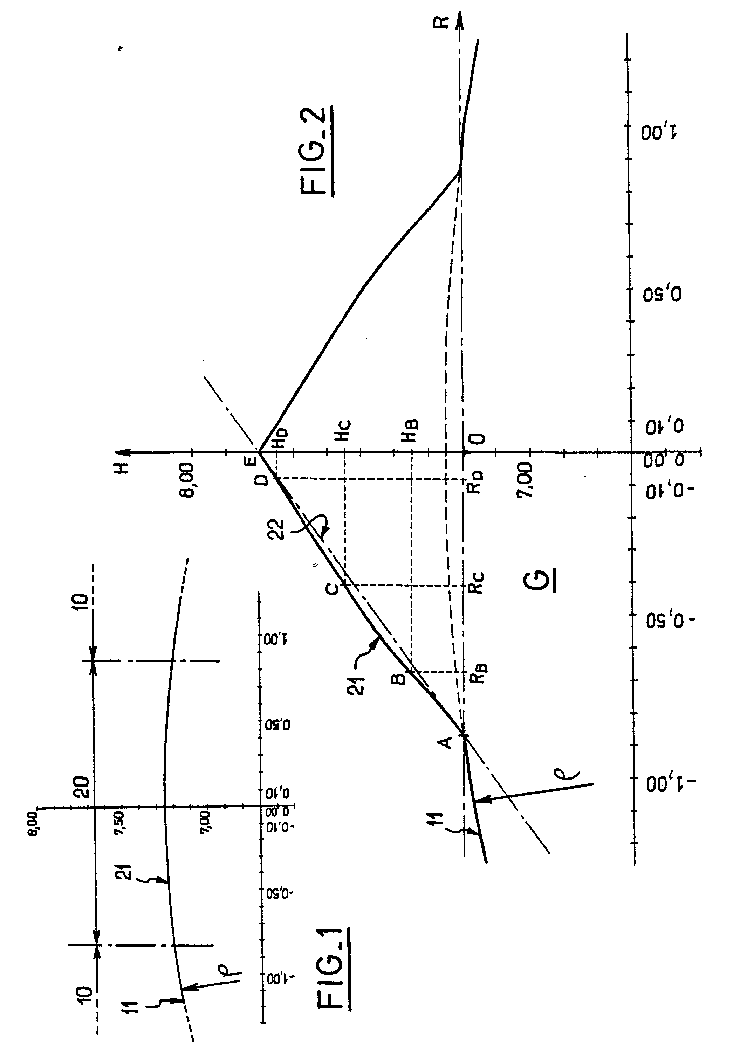

De préférence, en se référant à la partie de gauche $\underline{G}$ de la figure 2, la génératrice de ladite surface de révolution comporte successivement, depuis la base jusqu'au sommet : un premier arc de courbe de pente croissante, un second arc de courbe de pente décroissante, un troisième arc de courbe de pente sensiblement constante, et un quatrième arc de courbe de pente sensiblement croissante.

D'autres caractéristiques et avantages de l'invention apparaîtront à la description détaillée ci-dessous d'un exemple de réalisation d'une lentille selon les enseignements de la présente invention, faite en référence aux figures annexées sur lesquelles :

- la figure 1 est une vue partielle illustrant l'allure générale de la surface externe de la lentille de contact multifocale selon la présente invention, et

- la figure 2 est une vue agrandie correspondant à la figure 1, l'échelle des ordonnées ayant été considérablement dilatée, de manière à montrer l'allure du dôme central de la lentille.

La lentille comporte essentiellement (figure 1) une zone annulaire sphérique 10, apportant une correction pour la vision de loin et une zone centrale asphérique 20, apportant une correction pour la vision de près et la vision intermédiaire.

Le rayon $\rho$ de la surface extérieure sphérique 11 (figure 2) de la zone annulaire 10 est choisi en fonction de la correction que l'on souhaite apporter pour la vision de loin, ce rayon ayant typiquement une valeur comprise entre 6,60 et 9,30 mm, pour des corrections comprises respectivement entre +5 et -11 dioptries.

La zone centrale 20 présente une surface 21 en saillie par rapport à la surface sphérique 11, cette surface 21 étant une surface asphérique de révolution, en forme de dôme.

On va maintenant décrire en détail l'allure de cette surface asphérique 21, en référence à la figure 2 sur laquelle, pour la clarté de l'illustration, on a amplifié considérablement l'échelle des hauteurs H, ce coefficient d'amplification étant sur la figure 2 de l'ordre de 100 fois.

Par ailleurs, toutes les dimensions indiquées seront toujours les dimensions obtenues après usinage, donc à sec. Pour avoir les dimensions à l'état hydraté, il faudra appliquer aux valeurs indiquées le coefficient d'expansion linéaire correspondant à la matière utilisée, dans le cas de lentille souple. Du point de vue des fonctions optiques de la lentille, ce sont bien sûr les dimensions de la lentille souple, c'est-à-dire à l'état hydraté, qui sont déterminantes.

On peut par exemple utiliser pour la réalisation de la lentille de l'invention, un poly(hydroxyéthylméthacrylate) à 38,4% d'hydrophilie, présentant un coefficient d'expansion linéaire, isotrope, de 1,19.

Enfin, on notera que l'allure de la courbe que l'on va donner est celle que l'on obtient avant polissage. Cela signifie que son allure générale sera conservée après polissage, mais que certaines zones de transition seront rendues encore plus progressives, en particulier le sommet du dôme ainsi que son raccordement à la zone annulaire sphérique.

La surface de révolution 21 en forme de dôme qui constitue la surface extérieure de la partie centrale asphérique de la lentille est sensiblement en forme de cône 22, mais avec sa surface s'étendant essentiellement d'un même côté de ce cône, essentiellement à l'extérieur de celui-ci.

En d'autres termes, la génératrice de la surface 21 (c'est-à-dire l'arc AE) sera essentiellement située du même côté de la génératrice du cône 22 (c'est-à-dire le segment AE) ayant même sommet et même cercle de base.

Les deux paramètres principaux déterminant l'allure du dôme sont, avant polissage et à l'état sec :
- la hauteur OE du sommet, qui doit être comprise entre 3 et 6 μm (5,75 μm dans l'exemple de la figure 2), et
- le diamètre du cercle de base (c'est-à-dire deux fois le rayon OA), qui doit être compris entre 1,4 et 1,9 mm (1,58 mm dans l'exemple de la figure 2).

En ce qui concerne le profil de la génératrice du dôme, celui-ci se subdivise essentiellement en quatre parties distinctes qui s'analysent comme suit, en référence à la partie gauche $\underline{G}$ de la figure 2.

Un premier arc de courbe $\overline{AB}$ génère en fait une zone de raccordement entre la zone annulaire sphérique de la lentille et la portion centrale asphérique ayant véritablement une fonction correctrice de la vision intermédiaire et de la vision de près.

Un second arc de courbe BC génère une zone de transition amorçant la zone correctrice de la vision intermédiaire.

Un troisième arc de courbe, en fait essentiellement rectiligne, CD, engendre la zone correctrice de la vision intermédiaire, et eventuellement de la vision de près.

Enfin, un quatrième arc de courbe DE engendre la portion centrale du dôme qui est responsable de la correction de la vision de près, à très près.

Il convient de préciser ici que, en se référant à la partie gauche $\underline{G}$ de la figure 2, le profil de la génératrice du dôme présente une dérivée dH/dR de signe constamment positif, les différents arcs de courbes individuels pouvant cependant présenter des pentes croissantes, constantes ou décroissantes.

Le premier arc de courbe AB présente une partie croissante ; la zone engendrée n'a pas de fonction optique correctrice propre, mais est cependant indispensable pour éviter la perception d'images parasites.

Les coordonnées du point B peuvent être définies par sa hauteur $H_B$ et son ecartement radial $R_B$, par référence aux caractéristiques principales du dôme, à savoir respectivement sa hauteur OE et son rayon de base OA, de la façon suivante :
$0,7 \leq R_B/OA \leq 0,8$
$0,2 \leq H_B/OD \leq 0,3$

Le second arc de courbe BC est de pente décroissante, mais passe cependant dans le mode de réalisation particulier décrit en référence à la figure 2 par un maximum, c'est-à-dire que sensiblement au milieu de l'arc BC, l'écart par rapport à la génératrice du cône (segment AE) passe par un maximum. Cette zone est essentielle pour amorcer ou préparer la zone subséquente de correction de la vision intermédiaire.

Les coordonnées du point C peuvent être définies par sa hauteur $H_C$ et son écartement radial $R_C$, par référence aux caractéristiques principales du dôme, à savoir respectivement sa hauteur OE et son rayon de base OA, de la façon suivante :
$0,55 \leq R_C / OA \leq 0,65$
$0,40 \leq H_C / OE \leq 0,50$

La troisième position de courbe CD présente une pente sensiblement constante, c'est-à-dire qu'il génère en fait une surface pratiquement tronconique responsable de la correction de la vision intermédiaire.

Les coordonnées du point D peuvent être définies par sa hauteur $H_D$ et son ecartement radial $R_D$, par référence aux caractéristiques principales du dôme, à savoir respectivement sa hauteur OE et son rayon de base OA, de la façon suivante :
$0,15 \leq R_D / OA \leq 0,25$
$0,90 \leq H_D / OE \leq 0,95$

Enfin, le dernier arc de courbe DE, de pente généralement croissante, engendre une dernière portion de surface sensiblement conique. La position exacte du point D ainsi que la pente de cet arc de courbe peuvent subir quelques variations essentiellement en fonction du pouvoir correcteur de la vision de près, que l'on souhaite conférer à la lentille. Dans la pratique, notamment par suite du polissage ultérieur, le sommet du dôme peut présenter un aspect légèrement arrondi sans que cela se traduise par une quelconque perturbation de la vision de près.

De telles lentilles peuvent être fabriquées par usinage d'un palet de matière classiquement utilisée pour la production de lentilles de contact, ou encore par moulage. Dans l'un et l'autre cas, on obtient des lentilles semi-finies qu'il conviendra généralement de soumettre à un polissage final.

L'expérimentation des lentilles de contact conformes à la présente invention a révélé que, contrairement à toutes les lentilles multifocales proposées à ce jour, elles permettaient d'assurer à la fois une parfaite vision de près, de loin, ainsi qu'à des distances intermédiaires, et ceci sans la moindre perception d'images parasites.

## Revendications

1. Lentille de contact multifocale, comportant une zone annulaire sphérique (10) apportant une correction pour la vision de loin et une zone centrale asphérique (20) apportant une correction pour la vision de près et la vision intermédiaire, cette zone centrale présentant une surface de révolution en forme de dôme en saillie sur la face extérieure de la lentille, caractérisée en ce que le dôme a une forme approximative de cône, sa surface (21) s'étendant essentiellement d'un même côté de ce cône (22), à l'extérieur de celui-ci.

2. Lentille selon la revendication 1, caractérisée en ce que la hauteur du sommet du dôme (OE) est comprise, avant polissage et à l'état sec, entre 3 et 6μm (respectivement 3,57 et 7,14μm (à l'état hydraté).

3. Lentille selon l'une des revendications 1 et 2, caractérisée en ce que le diamètre de base du dôme (2xOA) est compris, avant polissage et à l'état sec, entre 1,4 et 1,9 mm (respectivement 1,66 et 2,26 mm à l'état hydraté).

4. Lentille selon l'une des revendications 1 à 3, caractérisée en ce que la génératrice (AE) de ladite surface de révolution (21) comporte successivement, depuis la base jusqu'au sommet :
* un premier arc de courbe (AB), de pente croissante,
* un second arc de courbe (BC), de pente décroissante,
* un troisième arc de courbe (CD), de pente sensiblement constante, et
* un quatrième arc de courbe (DE), de pente généralement croissante.

5. Lentille selon la revendication 4, caractérisée en ce que le point de raccordement (B) entre le premier et le second arc de courbe est situé à une hauteur (H_B) comprise entre 20 et 30% de la hauteur (OE) du dôme, et à un écartement radial (R_B) compris entre 70 et 80% du rayon (OA) de la base du dôme.

6. Lentille selon l'une des revendications 4 et 5, caractérisée en ce que le point de raccordement (C) entre le second et le troisième arc de courbe est situé à une hauteur (H_C) comprise entre 40 et 50% de la hauteur (OE) du dôme, et un écartement radial (R_C) compris entre 55 et 65% du rayon (OA) de la base du dôme.

7. Lentille selon l'une des revendications 4 à 6, caractérisée en ce que le point de raccordement (D) entre le troisième et le quatrième arc de courbe est situé à une hauteur (H_D) comprise entre 90 et 95% de la hauteur (OE) du dôme et à un écartement radial (R_D) compris entre 15 et 25% du rayon (OA) de la base du dôme.

8. Lentille selon l'une des revendications 4 à 7, caractérisée en ce que l'écart entre la surface de révolution (21) constituant la partie centrale asphérique de la lentille et la génératrice (AE) du cône 22 passe par un maximum dans la zone du second arc de courbe BC, sensiblement au voisinage de la partie médiane de ce dernier.

FIG.1

FIG.2

EP 0 344 073 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 184 490 (F.D. VINZIA) <br> * Résumé; revendications * <br> --- | 1 | G 02 C 7/06 |
| D,A | EP-A-0 232 191 (P. CAPEZ) <br> * Résumé; revendications * <br> --- | 1 | |
| A | US-A-4 162 122 (A.L. COHEN) <br> --- | | |
| A | FR-A-1 423 908 (LABORATORIES YSOPTIC) <br> --- | | |
| A | FR-A- 908 133 (R.A. DUDRAGNE) <br> ----- | | |

**DOMAINES TECHNIQUES RECHERCHES (Int. Cl.4)**

G 02 C 7/06
G 02 C 7/04

**Le présent rapport a été établi pour toutes les revendications**

| Lieu de la recherche | Date d'achèvement de la recherche | Examinateur |
|---|---|---|
| LA HAYE | 16-08-1989 | CALLEWAERT-HAEZEBROUCK H |